# EUROPÄISCHE PATENTSCHRIFT

(11) **EP 0 444 526 B1**
(45) Veröffentlichungstag und Bekanntmachung des Hinweises auf die Patenterteilung: **29.03.1995**
(21) Anmeldenummer: 91102511.2
(22) Anmeldetag: 21.02.1991
(51) Int. Cl.: G02B 17/04, G02B 5/122, G01B 9/02

(54) **Optische Vorrichtung**
Optical device
Dispositif optique

(30) Priorität: 01.03.1990 DE 4006407
(43) Veröffentlichungstag der Anmeldung: 04.09.1991
(73) Patentinhaber: Dr. Johannes Heidenhain GmbH, D-83292 Traunreut (DE)
(72) Erfinder: Spanner, Erwin, Dipl.-Phys., W-8220 Traunstein (DE)

(56) Entgegenhaltungen:
- SU-A- 595 635
- US-A- 3 976 379
- US-A- 4 711 576
- US-A- 4 950 078
- PATENT ABSTRACTS OF JAPAN vol. 7, no. 30 (P-173)(1175) 15. Februar 1983 & JP-A-57 181 518

## Beschreibung

Die Erfindung bezieht sich auf eine optische Vorrichtung nach dem Oberbegriff des Anspruches 1.

Ein Dokument, welches diesen Oberbegriff stützt, ist US-A- 4 711 576.

Optische Vorrichtungen im allgemeinen, in denen retroreflektierende Elemente wie Tripelprismen, Tripelspiegel, Katzenaugen, Kugelflächenreflektoren und mit Einschränkungen auch 90°-Prismen, -Spiegel verwendet werden, sind bekannt.

Bei bekannten Vorrichtungen fällt das Beleuchtungsstrahlenbündel von der Basis her in das retroreflektierende Element ein, wird umgelenkt und parallel zu sich selbst reflektiert. Das bedeutet, daß die Lichtquelle auf der Basisseite angeordnet sein muß, oder daß der Beleuchtungsstrahlengang mit Hilfe von optischen Umlenkelementen in die Basis eingeleitet werden muß. Durch diese Bedingungen ist der Raumbedarf für derartige Vorrichtungen relativ hoch.

Um den Raumbedarf zu verringern, ist schon vor langer Zeit vorgeschlagen worden, die Spitze und die Ecken beispielsweise eines Tripelprismas zu kappen, so daß nur noch das für den Reflexionsstrahlengang benötigte Fragment zur Verfügung steht. Die räumliche Anordnung der Beleuchtungseinrichtung wurde dadurch jedoch nicht verändert, so daß die diesbezüglichen Nachteile erhalten geblieben sind.

Der Erfindung liegt die Aufgabe zugrunde, die bisherigen Nachteile derartiger Anordnungen und Vorrichtungen zu verringern bzw. zu vermeiden und eine Vorrichtung der eingangs genannten Art zu schaffen, deren Baugröße noch weiter verringert werden kann, und die in Anordnungen verwendet werden kann, bei denen bisher retroreflektierende Elemente nicht oder nur unter schwierigen Bedingungen eingesetzt werden konnten.

Diese Aufgabe wird von einer Vorrichtung mit den Merkmalen des Anspruches 1 gelöst.

Die Vorteile der Erfindung liegen darin, daß die retroreflektierenden Elemente von hinten, also rückwärtig durchstrahlt werden, wodurch an der Basis reflektierende Elemente angeordnet werden können, die bei den bisherigen Beleuchtungsmethoden störend im Strahlengang gelegen hätten, also dort nicht angeordnet werden konnten.

Die Erfindung kann in besonders vorteilhafter Weise bei Positionsmeßeinrichtungen eingesetzt werden, daher sind die abhängigen Ansprüche auf derartige Vorrichtungen gerichtet.

Mit Hilfe von Ausführungsbeispielen soll die Erfindung anhand der Zeichnungen näher erläutert werden.

Es zeigt
- Figur 1: eine optische Verzögerungsleitung in schematisierter Darstellung;
- Figur 2: einen Abstandssensor und
- Figur 3: ein Michelson-Interferometer.

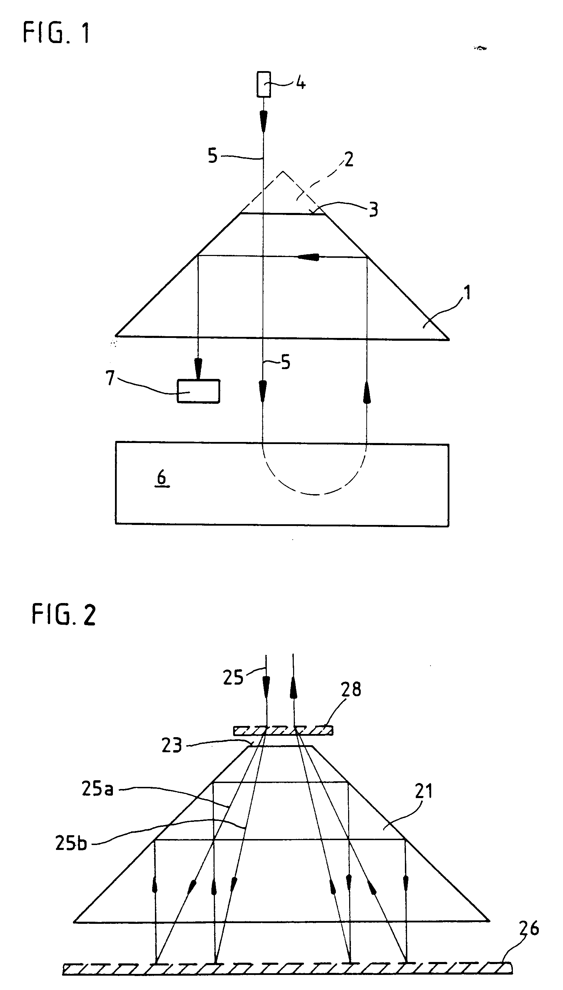

Eine in Figur 1 schematisch dargestellte sogenannte optische Verzögerungsleitung weist ein Tripelprisma 1 auf, dessen Spitze 2 gekappt ist. Durch die gekappte Spitze 2 entsteht eine Fläche 3 am Prisma 1, die zur Basis parallel liegen kann, aber nicht muß. Hinter dieser Fläche 3 ist eine Beleuchtungseinrichtung in Form eines Lasers 4 angeordnet, dessen Beleuchtungsstrahlenbündel 5 rückwärtig in das Tripelprisma 1 einfällt und an der Basis wieder austritt. Nach dem Austritt aus der Basis des Tripelprismas 1 trifft das Beleuchtungsstrahlenbündel 5 auf ein reflektierendes Element 6. Welcher Art das reflektierende Element 6 ist, bleibt im schematisierten Ausführungsbeispiel offen, es kann nämlich jede Art von reflektierendem Element sein, auch ein Beugungsgitter, wie zu den nachfolgenden Ausführungsbeispielen noch erläutert werden wird.

Das zurückreflektierte Strahlenbündel 6 tritt wieder in das Tripelprisma 1 ein, wird einmal retroreflektiert und tritt anschließend aus dem Tripelprisma 1 aus und wird von einem Detektor 7 detektiert.

Auf der Basis dieser schematisch dargestellten und erläuterten optischen Verzögerungsleitung lassen sich Positionsmeßgeräte wie Abstandssensoren oder Interferometer aufbauen, wie nun zu den Figuren beschrieben werden wird.

In Figur 2 ist ein Abstandssensor 20 beschrieben, bei dem die Abstandsänderungen von zueinander parallelen Beugungsgittern zu abstandsproportionalen Gangunterschiedsdifferenzen führen.

Ein nicht dargestellter Laser speist rückwärtig in ein gekapptes Tripelprisma 21 einen Beleuchtungsstrahl 25 ein, der von einem Beugungsgitter 28 in Teilstrahlenbündel 25a und 25b aufgespalten wird, die in unterschiedliche Richtungen laufen.

Bei dem Tripelprisma 21, welches sich zwischen Beugungsgittern 28 und 26 befindet ist die Spitze entfernt, und die Teilstrahlenbündel 25a und 25b treten - nicht wie üblich an der Basis, sondern - an der der Basis gegenüberliegenden Fläche 23 ein, die durch die Kappung der Spitze entstanden ist.

Ohne Berücksichtigung der unterschiedlichen Brechnungsindizes - die hier, wie auch bei den anderen Ausführungsbeispielen vernachlässigt werden können - durchlaufen die Teilstrahlenbündel 25a und 25b unbeeinflußt das Tripelprisma 21 sozusagen von rückwärts und treffen auf das Beugungsgitter 26, das in diesem Fall als Reflexionsgitter ausgebildet ist. An diesem Reflexionsgitter 26 werden die Teilstrahlenbündel 25a und 25b durch Beugung parallel zueinander ausgerichtet und treten nun von der Basis her ins Tripelprisma 21 ein. Sie durchlaufen das Tripelprisma 21 und treffen als parallele Teilstrahlenbündel 25a und 25b wieder auf das Reflexionsgitter 26. Dort werden sie wieder gebeugt und durch die der Basis des Tripelprismas 21 gegenüberliegende Fläche 23 auf das Beugungsgitter 28 reflektiert. Dort interferieren sie und die Hell-Dunkelmodulation kann detektiert werden.

Abstandsänderungen der beiden Gitter 28 und 26 führen zu Gangunterschiedsdifferenzen der interferierenden Teilstrahlenbündel 25a und 25b, die den Abstandsänderungen proportional sind, wobei die Hell-Dunkelmodulation der interferierenden Teilstrahlenbündel 25a und 25b das Abstands- Meßsignal liefert.

Die gewünschte Signalperiode wird durch geeignete Dimensionierung von Lichtwellenlänge und/oder Gitterkonstante eingestellt. Phasenverschobene Signale erzeugt man in bekannter Weise entweder polarisationsoptisch oder durch geeignete Auslegung des Aufspaltgitters als Phasengitter.

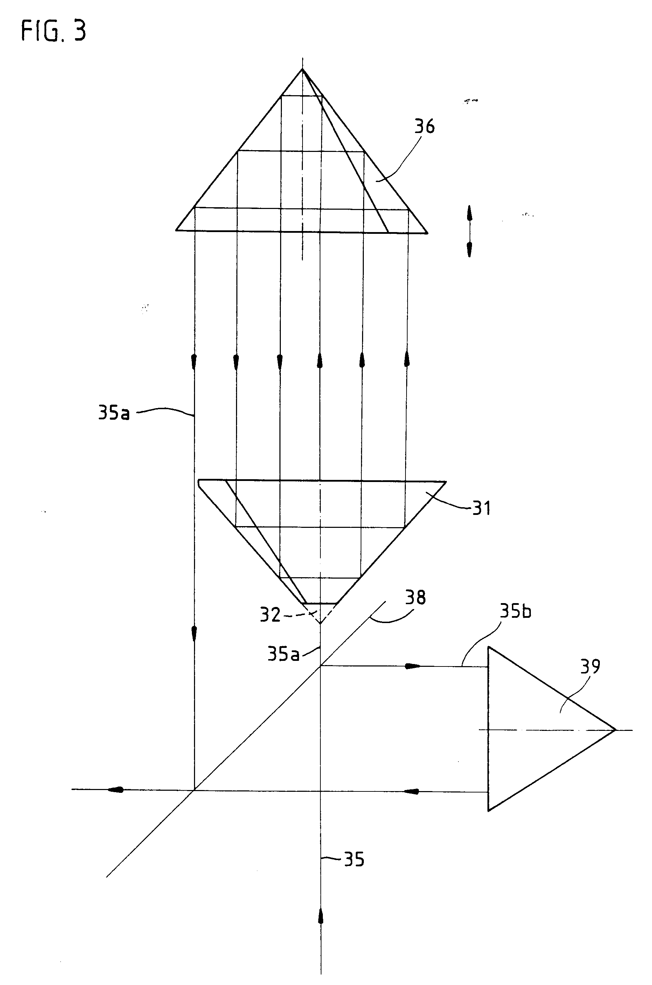

In Figur 3 ist ein Interferometer dargestellt, das von der Erfindung Gebrauch macht.

Ein nicht dargestellter Laser liefert einen Beleuchtungsstrahl 35, der von einem Strahlteiler 38 in einen Meßstrahl 35a und einen Referenzstrahl 35b aufgespalten wird. Der Referenzstrahl 35b gelangt in bekannter Weise zu einem Referenzreflektor 39, wird dort umgelenkt und gelangt wieder zum Strahlteiler 38.

Der Meßstrahl 35a wird rückwärtig durch ein Tripelprisma 31 geleitet, bei dem die Spitze 32 gekappt ist und fällt auf ein weiteres Tripelprisma 36, dessen Zentralachse zur Zentralachse des gekappten Tripelprismas 31 versetzt ist.

Aufgrund der Retroreflexion wird der Meßstrahl 35a wieder in das gekappte Tripelprisma 31 reflektiert, dort nochmals umgelenkt, wieder in das Meß-Tripelprisma 36 geleitet, u.s.w.. Der Meßstrahl wird sozusagen mehrfach gefaltet. Durch den mehrmaligen Durchlauf der Meßstrecke wird bei geringer Baugröße eine höhere Auflösung erreicht. Die Anzahl der Zyklen ist nahezu beliebig und nach der letzten Reflexion trifft der Meßstrahl 35a wieder auf den Strahlteiler 38, wo er mit dem Referenzstrahl 35b interferiert.

Die Hell- Dunkelmodulation kann von einem nicht dargestellten Detektor erfaßt werden.

## Patentansprüche

1. Optische Vorrichtung zur Umlenkung von Strahlengängen mit einem reflektierenden Element (6; 26; 36) und einem retroreflektierenden Element (1; 21; 31), die so angeordnet sind, daß ein am reflektierenden Element reflektiertes Strahlenbündel derart in das retroreflektierende Element (1; 21; 31) zurückreflektiert wird, daß im retroreflektierenden Element (1; 21; 31) wenigstens eine Retroreflexion des Strahlenbündels stattfindet,
dadurch gekennzeichnet, daß das retroreflektierende Element an seiner dem reflektierenden Element abgewandten Seite einen Bereich aufweist, der derart ausgebildet ist, daß das Strahlenbündel, bevor es auf das reflektierende Element auftrifft, durch diesen Bereich in das retroreflektierende Element eintreten und ohne Reflexion im retroreflektierenden Element durch dieses hindurchtreten kann.

2. Optische Vorrichtung nach Anspruch 1, bei der das retroreflektierende Element ein Tripelprisma (1; 21; 31) mit gekappter Spitze ist.

3. Optische Vorrichtung nach Anspruch 1, bei der das retroreflektierende Element ein Tripelprisma (21) und das reflektierende Element ein Beugungsgitter (26) ist.

4. Optische Vorrichtung nach Anspruch 1, bei der das retroreflektierende Element ein Tripelprisma (31) und das reflektierende Element ein weiteres Tripelprisma (36) ist.

5. Optische Vorrichtung nach Anspruch 1, bei der das retroreflektierende Element (21) zwischen zwei Beugungsgittern (26, 28) angeordnet ist, von denen eines das reflektierende Element (26) bildet.

6. Interferometer mit mehrfach gefaltetem Strahlengang (35a) mit einer optischen Vorrichtung nach Anspruch 1.

## Claims

1. An optical device for deflecting beam paths, with a reflecting element (6; 26; 36) and a retro-reflecting element (1; 21; 31), which are so arranged that a bundle of rays reflected by the reflecting element is so reflected back by the retro-reflecting element (1; 21; 31) that at least one retro-reflection of the bundle of rays takes place in the retro-reflecting element (1; 21; 31), characterized in that the retro-reflecting element has a region on its side facing away from the reflecting element which is so formed that the bundle of rays can enter into the retro-reflecting element through this region before it impinges on the reflecting element and pass through the retro-reflecting element without reflection therein.

2. An optical device according to claim 1, in which the retro-reflecting element is a triple prism with a cut off tip.

3. An optical device according to claim 1, in which the retro-reflecting element is a triple prism (21) and the reflecting element is a diffraction grating (26).

4. An optical device according to claim 1, in which the reflecting element is a triple prism (31) and the reflecting element is a further triple prism (36).

5. An optical device according to claim 1, in which the retro-reflecting element (21) is arranged between two diffraction gratings (26, 28), of which one forms the reflecting element (26).

6. An interferometer with a multiply folded beam path (35a) with an optical device according to claim 1.

## Revendications

1. Dispositif optique pour dévier la marche de rayons comportant un élément réfléchissant (6; 26; 36) et un élément rétro-réfléchissant (1; 21; 31) dont la disposition est telle qu'un faisceau de rayons réfléchi par l'élément réfléchissant soit renvoyé sur l'élément rétro-réfléchissant (1; 21; 31) de telle sorte qu'il y ait au moins une rétro-réflexion du faisceau de rayons sur l'élément rétro-réfléchissant (1; 21; 31), caractérisé par le fait que l'élément rétro-réfléchissant comporte sur sa face éloignée de l'élément réfléchissant une zone dont l'agencement est tel que le faisceau de rayons, avant d'arriver sur l'élément réfléchissant, pénètre dans ladite zone de l'élément rétro-réfléchissant et traverse celle-ci sans réflexion sur l'élément rétro-réfléchissant.

2. Dispositif optique selon la revendication 1, dans lequel l'élément rétro-réfléchissant est un prisme triple (1; 21; 31) dont le sommet est tronqué.

3. Dispositif optique selon la revendication 1, dans lequel l'élément rétro-réfléchissant est un prisme triple (21) et l'élément réfléchissant un réseau de diffraction (26).

4. Dispositif optique selon la revendication 1, dans lequel l'élément rétro-réfléchissant est un prisme triple (31) et l'élément réfléchissant un autre prisme triple (36).

5. Dispositif optique selon la revendication 1, dans lequel l'élément rétro-réfléchissant (21) est disposé entre deux réseaux de diffraction (26, 28) parmi lesquels l'un constitue l'élément réfléchissant (26).

6. Interféromètre dans lequel la marche (35a) des rayons est déviée plusieurs fois, comportant un dispositif selon la revendication 1.
